# EUROPEAN PATENT APPLICATION

(11) **EP 3 872 645 A1**
(43) Date of publication of application: **01.09.2021**
(21) Application number: 21159567.3
(22) Date of filing: 26.02.2021
(51) Int. Cl.: G06F 16/13

(54) **DATA LINKAGE SYSTEM AND CONFIGURATION CHANGE SYSTEM**

(30) Priority: 28.02.2020 JP 2020034411
(71) Applicant: KYOCERA Document Solutions Inc., Osaka-shi, Osaka 540-8585 (JP)
(72) Inventor: NAKAJIMA, Koki, Osaka, 540-8585 (JP)
(74) Representative: Viering, Jentschura & Partner mbB Patent- und Rechtsanwälte

(57) **Abstract**

This data linkage system includes a data collection system that collects data held by an information system, and a data storage system that stores the data held by a plurality of information systems collected by the data collection system. When a configuration management server of the data linkage system detects a change in a data configuration in an information system (YES in S442), and content of a change of a configuration among configurations of the data linkage system, which configuration should be changed according to the content of the change in data configuration in the information system, has been determined (YES in S443), the configuration management server changes the configuration among configurations of the data linkage system, which configuration should be changed according to the content of the change in data configuration in the information system, based on the content having been determined (S446).

## Description

### BACKGROUND

### Field of the Invention

The present disclosure relates to a data linkage system and a configuration change system that collect and store data held by a plurality of information systems.

### Description of Related Art

Conventionally, an information processing system is known that links a plurality of external systems.

However, in data linkage systems that collect and store data held by a plurality of information systems, the behavior after a change occurs in the data configuration in the information systems is unknown.

### SUMMARY

Therefore, the present disclosure has an object of providing a data linkage system and a configuration change system that are capable of linking data even after a change occurs in the data configuration of an information system of the data collection destination.

A data linkage system according to the present disclosure comprises: a data collection system that collects data held by an information system; a data storage system that stores data held by a plurality of information systems and collected by the data collection system and a configuration change system that changes a configuration of the data linkage system, and when a change in data configuration in the information system is detected and content of a change of a configuration among configurations of the data linkage system, which configuration should be changed according to the content of the change in data configuration in the information system, has been determined, the configuration change system changes the configuration among configurations of the data linkage system, which configuration should be changed according to the content of the change in data configuration in the information system, based on the content having been determined.

According to this configuration, when the data linkage system of the present disclosure detects a change in the data configuration in the information system of the data collection destination, and the content of the change in the configuration of the data linkage system itself which should be changed has been determined according to the content of the change in the data configuration in the information system, the configuration of the data linkage system itself which should be changed according to the content of the change in the data configuration in the information system is automatically changed based on the determined content. Therefore, data can be linked even when there is a change in the data configuration in the information system of the data collection destination.

In the data linkage system according to the present disclosure, the configuration change system may change a configuration of the data collection system according to the change in the data configuration in the information system.

According to this configuration, the data linkage system of the present disclosure changes a configuration of the data collection system according to the change in the data configuration in the information system. Therefore, the data can be appropriately collected even when there is a change in the data configuration in the information system of the data collection destination.

In the data linkage system according to the present disclosure, the data storage system may include a data conversion system that converts the data collected by the data collection system, and the configuration change system may change a configuration of the data conversion system according to the change in the data configuration in the information system.

According to this configuration, the data linkage system of the present disclosure changes the configuration of the data conversion system according to the change in the data configuration in the information system. Therefore, the data can be appropriately converted even when there is a change in the data configuration in the information system of the data collection destination.

In the data linkage system according to the present disclosure, the change in the data configuration in the information system may be detected based on information from a configuration management server of the information system.

According to this configuration, the data linkage system of the present disclosure detects the change in the data configuration in the information system based on information from the configuration management server of the information system. Therefore, the change in the data configuration in the information system can be appropriately detected.

A configuration change system according to the present disclosure changes a configuration of a data linkage system, including a data collection system that collects data held by an information system, and a data storage system that stores the data held by a plurality of information systems collected by the data collection system, wherein when a change in data configuration in the information system is detected and content of a change of a configuration among configurations of the data linkage system, which configuration should be changed according to the content of the change in data configuration in the information system, has been determined, the configuration change system changes the configuration among configurations of the data linkage system, which configuration should be changed according to the content of the change in data configuration in the information system, based on the content having been determined.

According to this configuration, when the configuration change system of the present disclosure detects a change in the data configuration in the information system of the data collection destination made by the data linkage system, and content of a change of a configuration among configurations of the data linkage system, which configuration should be changed according to the content of the change in data configuration in the information system, has been determined, the configuration from among the data linkage system which configuration should be changed according to the content of the change in data configuration in the information system, is automatically changed based on the content having been determined. Therefore, data can be linked by the data linkage system even when there is a change in the data configuration in the information system of the data collection destination made by the data linkage system.

### Effects of the Disclosure

The data linkage system and the configuration change system according to the present disclosure are capable of linking data even if there is a change in the data configuration in the information system of the data collection destination.

### BRIEF DESCRIPTION OF THE DRAWINGS

FIG. 1 is a block diagram of a system according to an embodiment of the present disclosure.
FIG. 2 is a block diagram of a pipeline provided in the data storage system shown in FIG. 1.
FIG. 3 is a block diagram of the pipeline orchestrator shown in FIG. 1.
FIG. 4 is a diagram showing an example of the flow of an operation performed by the system shown in FIG. 1 when data held by an information system is collected by a POST connector and transmitted to a pipeline.
FIG. 5 is a flowchart of an operation performed by the POST connector shown in FIG. 4 when files are transmitted to a pipeline.
FIG. 6 is a diagram showing an example of the flow of an operation performed by the system shown in FIG. 1 when data held by an information system is collected by a GET connector and passed to a pipeline.
FIG. 7 is a diagram showing an example of the flow of an operation performed by the system shown in FIG. 1 when data held by an information system is collected by a POST agent and transmitted to a pipeline.
FIG. 8 is a flowchart of an operation performed by the POST agent shown in FIG. 7 when files are transmitted to a pipeline.
FIG. 9 is a diagram showing an example of the flow of an operation performed by the system shown in FIG. 1 when data held by an information system is collected by a GET agent and passed to a pipeline.
FIG. 10 is a sequence diagram of part of an operation performed by the data linkage system shown in FIG. 1 when the data storage system stores data.
FIG. 11 is a sequence diagram of an operation that follows the operation shown in FIG. 10.
FIG. 12 is a flowchart of an operation performed by a masking processing unit in the masking processing shown in FIG. 10.
FIG. 13 is a diagram showing an example of a data management table used in the operation shown in FIG. 12.
FIG. 14 is a sequence diagram of an operation performed by the data linkage system shown in FIG. 1 when the masking processing unit has failed to perform data processing.
FIG. 15 is a sequence diagram of an operation performed by the data linkage system shown in FIG. 1 when the application unit requests an update of the data of a specific information system stored in the data storage system.
FIG. 16 is a flowchart of an operation performed by the data linkage system shown in FIG 1 when its own configuration is changed in response to a change in the configuration of a specific information system.

### DETAILED DESCRIPTION

Hereunder, an embodiment of the present disclosure will be described using the drawings.

First, a system according to an embodiment of the present disclosure will be described.

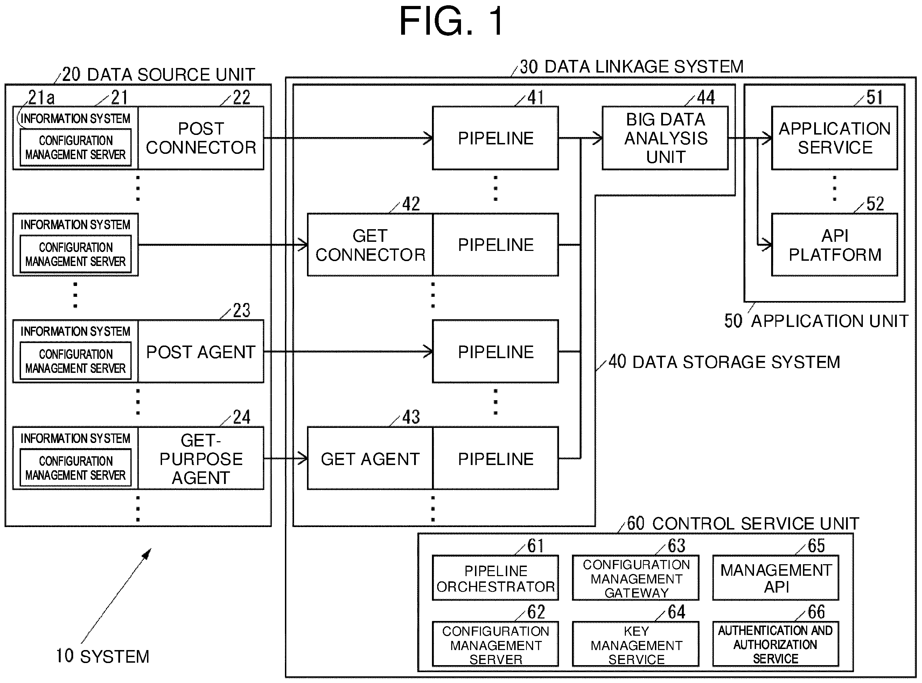

FIG. 1 is a block diagram of a system 10 according to the present embodiment.

As shown in FIG. 1, the system 10 includes a data source unit 20 that produces data, and a data linkage system 30 that links the data produced by the data source unit 20.

The data source unit 20 includes an information system 21 that produces data. The information system 21 includes a configuration management server 21a that saves the configuration and settings of the information system 21. The data source unit 20 may include at least one information system in addition to the information system 21. Examples of the information system include Internet of Things (IoT) systems such as remote management systems that remotely manage an image forming device such as an multifunction peripheral (MFP) or a printer-only machine, and in-house systems such as enterprise resource planning (ERP) and production management systems. Each information system may be configured by a single computer, or may be configured by a plurality of computers. The information system may hold structured data files. The information system may also hold unstructured data files. The information system may also hold a database of structured data.

The data source unit 20 includes a POST connector 22 serving as a data collection system which acquires files containing structured data or unstructured data held by an information system, and transmits the acquired files to a pipeline of the data linkage system 30 described below. The data source unit 20 may include at least one POST connector having the same configuration as the POST connector 22 in addition to the POST connector 22. The POST connector may be configured by a computer that constitutes an information system in which the POST connector itself acquires the files. The POST connector is also a component of the data linkage system 30.

The data source unit 20 includes a POST agent 23 serving as a data collection system which acquires structured data from a database of structured data held by an information system, and transmits the acquired structured data to a pipeline of the data linkage system 30 described below. The data source unit 20 may include at least one POST agent having the same configuration as the POST agent 23 in addition to the POST agent 23. The POST agent may be configured by a computer that constitutes an information system in which the POST agent itself acquires the structured data. The POST agent is also a component of the data linkage system 30.

The data source unit 20 includes a GET-purpose agent 24 serving as a data collection system which generates structured data for linking based on data held by an information system. The data source unit 20 may include at least one GET-purpose agent having the same configuration as the GET-purpose agent 24 in addition to the GET-purpose agent 24. The GET-purpose agent may be configured by a computer that constitutes an information system holding the data source from which the structured data for linking is generated. The GET-purpose agent is also a component of the data linkage system 30.

The data linkage system 30 includes a data storage system 40 that stores the data produced by the data source unit 20, an application unit 50 that uses the data stored by the data storage system 40, and a control service unit 60 that executes various controls with respect to the data storage system 40 and the application unit 50.

The data storage system 40 includes a pipeline 41 that stores the data produced by the data source unit 20. The data storage system 40 may include at least one other pipeline in addition to the pipeline 41. Because the data configuration in the information system may differ for each information system, the data storage system 40 basically includes a pipeline for each information system. Each pipeline may be configured by a single computer, or may be configured by a plurality of computers.

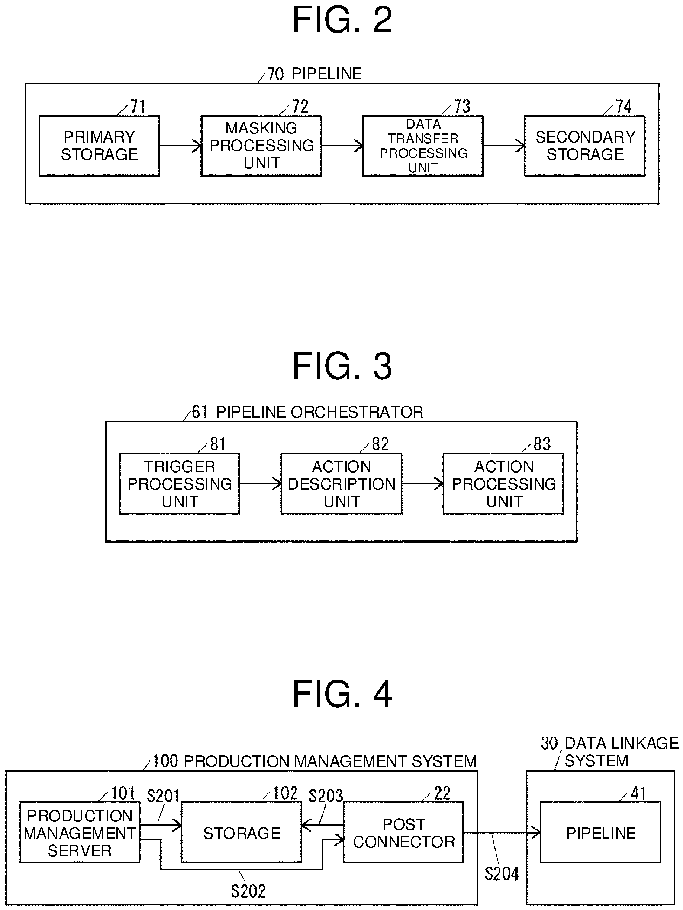

FIG. 2 is a block diagram of a pipeline 70 provided in the data storage system 40.

As shown in FIG. 2, the pipeline 70 includes: a primary storage 71 provided with a storage area that stores data received from the POST connector, the POST agent, the GET connector described below, or the GET agent described below; a masking processing unit 72 serving as a data conversion system that executes masking processing as data conversion processing with respect to privacy-related data among the data stored in the primary storage 71, such as the personal information of the users of the information system; a data transfer processing unit 73 that executes data transfer processing that transfers the data after execution of masking processing by the masking processing unit 72 to a big data analysis unit 44 described below (see FIG. 1); and a secondary storage 74 provided with a storage area that stores the data for transmission to the big data analysis unit 44. The primary storage 71 is provided because, if the processing fails in a data processing step performed after a step that stores data to the primary storage 71, such as the masking processing step or the data transfer processing step, it is possible to re-execute the processing that failed using the data stored in the primary storage 71 without re-transmitting the data from the data source unit 20 to the data linkage system 30, which has a high network communication cost. The primary storage 71 and the secondary storage 74 are not merely storage devices, but are systems that are capable of executing various processing as described below.

As shown in FIG. 1, the data storage system 40 includes a GET connector 42 serving as a data collection system that acquires files containing structured data or unstructured data held by an information system, and links the acquired files to a pipeline. The data storage system 40 may include at least one GET connector having the same configuration as the GET connector 42 in addition to the GET connector 42. The GET connector may be configured by a computer that constitutes a pipeline in which the GET connector itself links the files.

Note that, in information systems that do not support the acquisition of files containing structured data or unstructured data from the data storage system 40 side, the system 10 includes a POST connector in the data source unit 20. On the other hand, in information systems that support the acquisition of files containing structured data or unstructured data from the data storage system 40 side, the system 10 includes a GET connector in the data storage system 40.

The data storage system 40 includes a GET agent 43 serving as a data collection system that acquires the structured data generated by a GET-purpose agent, and links the acquired structured data to a pipeline. The data storage system 40 may include at least one GET agent having the same configuration as the GET agent 43 in addition to the GET agent 43. The GET agent may be configured by a computer that constitutes a pipeline in which the POST agent itself links structured data.

Note that, in information systems that do not support the acquisition of structured data from the data storage system 40 side, the system 10 includes a POST agent in the data source unit 20. On the other hand, in information systems that support the acquisition of structured data from the data storage system 40 side, the system 10 includes a GET-purpose agent in the data source unit 20, and a GET agent in the data storage system 40.

The data storage system 40 includes a big data analysis unit 44 serving as a data conversion system that executes final conversion processing as the data conversion processing which converts the data stored by the plurality of pipelines into a form that can be searched or aggregated by a query language such as a database language like SQL. The big data analysis unit 44 is also capable of executing searches and aggregation with respect to the data after execution of the final conversion processing in response to search requests and aggregation requests from the application unit 50 side. The big data analysis unit 44 may be configured by a single computer, or may be configured by a plurality of computers.

The final conversion processing may also include, as data conversion processing, data merging processing which merges the data of a plurality of information systems. If the system 10 includes, as information systems, a remote management system located in Asia to remotely manage a plurality of image forming devices located in Asia, a remote management system located in Europe to remotely manage a plurality of image forming devices located in Europe, and a remote management system located in the United States to remotely manage a plurality of image forming devices located in the United States, the three remote management systems are each provided with a device management table for managing the image forming devices managed by the remote management system itself. The device management table is information which displays various information about the image forming devices in association with an ID assigned to each image forming device. Here, because the three remote management systems are each independently provided with a device management table, the same ID may be assigned to different image forming devices in the device management tables of the three remote management systems. Therefore, when the big data analysis unit 44 merges the device management tables of the three remote management systems to generate a single device management table, it re-assigns the IDs of the image forming devices so that duplicates do not occur.

The application unit 50 includes an application service 51 that uses the data managed by the big data analysis unit 44 to execute specific operations instructed by a user, such as displaying the data or analyzing the data. The application unit 50 may include at least one application service in addition to the application service 51. Each of the application services may be configured by a single computer, or may be configured by a plurality of computers.

The application unit 50 includes an API platform 52 that provides an application program interface API that uses the data managed by the big data analysis unit 44 to execute specific processing. The API platform 52 may be configured by a single computer, or may be configured by a plurality of computers. For example, the API provided by the API platform 52 includes an API that transmits data of the remaining amount of consumable items collected from the image forming device by the remote management system to a consumables ordering system outside the system 10, which orders a consumable item when the remaining amount of a consumable item such as the toner of the image forming device is below a specific amount, and an API that transmits various data collected from the image forming device by the remote management system to a malfunction prediction system outside the system 10 that predicts a malfunction of the image forming device.

The control service unit 60 includes a pipeline orchestrator 61 serving as a processing monitoring system which monitors the processing at each step with respect to the data of the data source unit 20, the data storage system 40, and the application unit 50. The pipeline orchestrator 61 may be configured by a single computer, or may be configured by a plurality of computers.

FIG. 3 is a block diagram of the pipeline orchestrator 61.

As shown in FIG. 3, the pipeline orchestrator 61 includes a trigger processing unit 81 that processes operation triggers of the pipeline orchestrator 61, an action description unit 82 which stores a plurality of operation scenarios of the pipeline orchestrator 61, and an action processing unit 83 that executes the operations of the pipeline orchestrator 61.

As shown in FIG. 1, the control service unit 60 includes a configuration management server 62 which saves the configuration and settings of the data storage system 40, and which automatically deploys as necessary. The configuration management server 62 may be configured by a single computer, or may be configured by a plurality of computers. The configuration management server 62 constitutes a configuration change system that changes the configuration of the data linkage system 30.

The control service unit 60 includes a configuration management gateway 63 that connects to a configuration management server of an information system, and collects information for detecting a change in a configuration relating to a database or unstructured data of the information system, that is to say, a change in the data configuration in the information system. The configuration management gateway 63 may be configured by a single computer, or may be configured by a plurality of computers.

The control service unit 60 includes a key management service 64 that encrypts and stores security information such as the key information and connection strings required for linking systems such as information systems. The key management service 64 may be configured by a single computer, or may be configured by a plurality of computers.

The control service unit 60 includes a management API 65 that accepts requests from the data storage system 40 and the application unit 50. The management API 65 may be configured by a single computer, or may be configured by a plurality of computers.

The control service unit 60 includes an authentication and authorization service 66 that executes authentication and authorization of the application services of the application unit 50. The authentication and authorization service 66 may be configured by a single computer, or may be configured by a plurality of computers. The authentication and authorization service 66 confirms, for example, whether or not an application service is permitted to request an update of the data of an information system stored in the data storage system 40.

Next, the operation of the system 10 will be described.

First, an operation performed by the system 10 when data held by the information system 21 is collected by the POST connector 22 and transmitted to the pipeline 41 will be described.

FIG. 4 is a diagram showing an example of the flow of an operation performed by the system 10 when data held by the information system 21 is collected by the POST connector 22 and transmitted to the pipeline 41.

In the example shown in FIG. 4, the information system 21 is a production management system 100.

As shown in FIG. 4, the production management system 100 includes a production management server 101 that executes production management, and a storage 102 for storing files containing structured data or unstructured data.

The production management server 101 executes a backup to store files containing structured data or unstructured data in the storage 102 by batch processing (S201).

After the processing of S201, the production management server 101 instructs the POST connector 22 to transfer the files stored in the storage 102 in S201 to a pipeline (S202). Here, the production management server 101 includes, in the instruction issued in S202, the identification information of the files stored in the storage 102 in S201.

When the POST connector 22 receives the instruction issued in S202, it acquires the files specified by the identification information included in the instruction issued in S202 from the storage 102 (S203).

After the processing of S203, the POST connector 22 transmits the files acquired in S203 to the pipeline 41 to which the POST connector 22 itself is associated (S204).

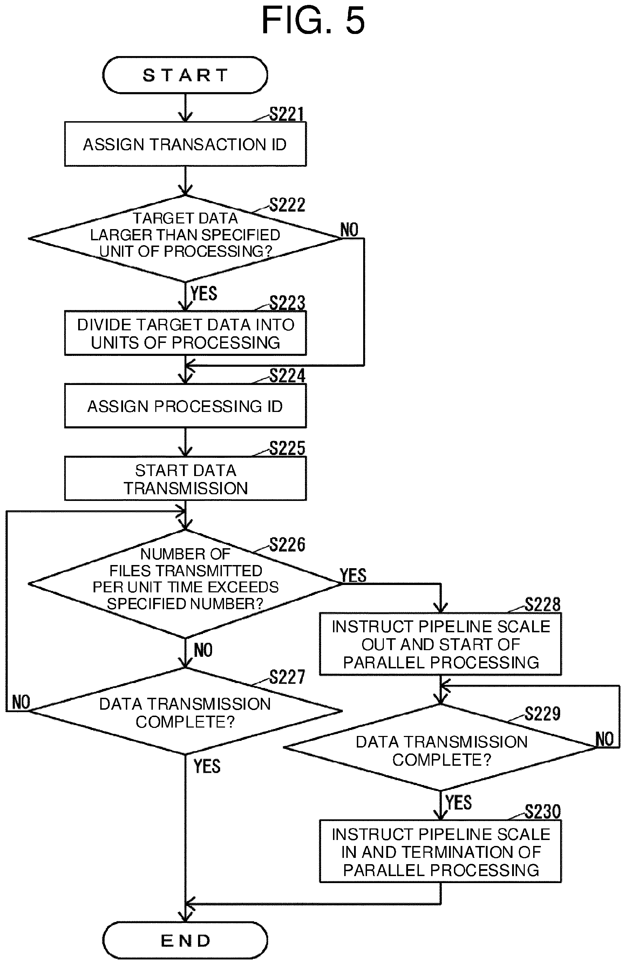

FIG. 5 is a flowchart of an operation performed by the POST connector 22 when file are transmitted to the pipeline 41.

As shown in FIG. 5, the POST connector 22 assigns a transaction ID as identification information to the current transaction, which transmits files to the pipeline 41 (S221). Here, the transaction ID is, for example, a numerical value which is incremented each time a new transaction is generated in the POST connector 22.

The POST connector 22 determines whether or not the target data of the current transaction is larger than a specific processing unit (S222). Here, the specific processing unit is, for example, a specific number of files.

If the POST connector 22 determines in S222 that the target data of the current transaction is larger than the specific processing unit, it divides the target data of the current transaction into specific processing units (S223).

If the POST connector 22 determines in S222 that the target data of the current transaction is less than or equal to a specific processing unit, or completes the processing of S223, it assigns a processing ID as identification information to each processing unit of data (S224). Here, the processing ID is, for example, a numerical value which is incremented each time a new processing unit of data is generated for the same transaction in the POST connector 22.

After the processing of S224, the POST connector 22 starts the transmission of each processing unit of the target data of the current transaction to the pipeline 41 (S225).

Then, the POST connector 22 determines whether or not the number of files transmitted to the pipeline 41 per specific unit of time exceeds a specific number (S226).

If the POST connector 22 determines in S226 that the number of files transmitted to the pipeline 41 per specific unit of time has not exceeded the specific number, it determines whether or not transmission of the target data of the current transaction to the pipeline 41 has been completed (S227).

If the POST connector 22 determines in S227 that transmission of the target data of the current transaction to the pipeline 41 has not been completed, it executes the processing of S226.

If the POST connector 22 determines in S227 that transmission of the target data of the current transaction to the pipeline 41 has been completed, it ends the operation shown in FIG. 5.

If the POST connector 22 determines in S226 that the number of files transmitted to the pipeline 41 per specific unit of time has exceeded the specific number, it instructs the pipeline orchestrator 61 to scale out the pipeline 41 and to start parallel processing using the pipeline 41 (S228). Therefore, the pipeline orchestrator 61 scales out the pipeline 41 to a specific state according to the instruction issued in S228, and instructs the pipeline 41 to start parallel processing.

Then, the POST connector 22 determines whether or not transmission of the target data of the current transaction to the pipeline 41 has been completed until it determines that transmission of the target data of the current transaction to the pipeline 41 has been completed (S229).

If the POST connector 22 determines in S229 that transmission of the target data of the current transaction to the pipeline 41 has been completed, it instructs the pipeline orchestrator 61 to scale in the pipeline 41 and to end parallel processing using the pipeline 41 (S230). Therefore, the pipeline orchestrator 61 scales in the pipeline 41 to the original state according to the instruction issued in S230, and instructs the pipeline 41 to end parallel processing.

After the processing of S230, the POST connector 22 ends the operation shown in FIG. 5.

Next, an operation performed by the system 10 when data held by an information system is collected by the GET connector 42 and passed to a pipeline will be described.

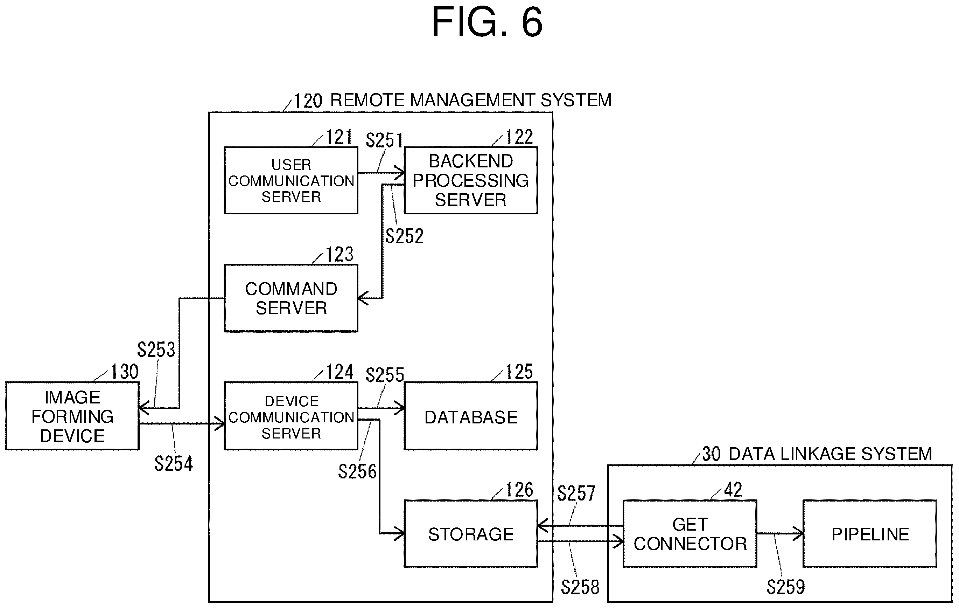

FIG. 6 is a diagram showing an example of the flow of an operation performed by the system 10 when data held by an information system is collected by the GET connector 42 and passed to a pipeline.

In the example shown in FIG. 6, the information system is a remote management system 120 of an image forming device. The example shown in FIG. 6 is an example of an operation performed when a user instructs the remote management system 120 to acquire a maintenance report that includes sensor information containing the output values of various sensors of the image forming device.

As shown in FIG. 6, the remote management system 120 includes a user communication server 121 for accepting an instruction from a user, a backend processing server 122 that executes processing according to the instruction from the user, a command server 123 that transmits various commands to the image forming device, a device communication server 124 for receiving data from the image forming device, a database 125 that stores various information about the image forming device managed by the remote management system 120, and a storage 126 for storing files containing structured data or unstructured data. The remote management system 120 manages a plurality of image forming devices including the image forming device 130. The database 125 stores a device ID as identification information of the image forming device for the image forming device managed by the remote management system 120.

The user of the remote management system 120 is capable of transmitting an instruction to the remote management system 120 to acquire a maintenance report of the image forming device 130. The instruction includes the device ID of the image forming device 130, which is the acquisition destination of the maintenance report. When the user communication server 121 of the remote management system 120 receives the instruction to acquire the maintenance report, it transmits the received instruction to the backend processing server 122 (S251).

When the backend processing server 122 receives the instruction to acquire the maintenance report transmitted by the user communication server 121 in S251, it transmits a request to the command server 123 to transmit a maintenance report acquisition command for acquiring the maintenance report (S252). The request contains the device ID included in the acquisition instruction of the maintenance report.

When the command server 123 receives the request to transmit the maintenance report acquisition command transmitted by the backend processing server 122 in S252, it transmits the maintenance report acquisition command to the image forming device 130 specified by the device ID included in the request (S253).

When the image forming device 130 receives the maintenance acquisition command transmitted by the command server 123 in S253, it transmits the maintenance report of the image forming device 130 itself to the remote management system 120 (S254). Here, the image forming device 130 includes the device ID of the image forming device 130 itself in the maintenance report.

When the device communication server 124 of the remote management system 120 receives the maintenance report transmitted by the image forming device 130 in S254, it determines whether or not the device ID included in the received maintenance report is included in the database 125 (S255).

If the device communication server 124 determines in S255 that the device ID included in the received maintenance report is included in the database 125, it stores the received maintenance report in the storage 126 (S256).

The GET connector 42 of the data linkage system 30 periodically searches the storage 126 of the remote management system 120, which is the information system associated with the GET connector 42 itself, for a file containing the maintenance report of the specific image forming device (S257).

When the GET connector 42 confirms that the file containing the maintenance report of the specific image forming device 130 exists in the storage 126, it acquires the file from the storage 126 (S258).

After the processing of S258, the GET connector 42 passes the file acquired in S258 to the pipeline to which the GET connector 42 itself is associated (S259).

When the file is passed to the pipeline, the GET connector 42 executes the same operation as the operation shown in FIG. 5. That is to say, the GET connector 42 assigns a transaction ID to the current transaction. Furthermore, if the target data of the current transaction is larger than the specific processing unit, the GET connector 42 divides the target data of the current transaction into specific processing units. Moreover, the GET connector 42 assigns a processing ID to the data of each processing unit. In addition, if the number of files passed to the pipeline per specific unit of time exceeds a specific number, the GET connector 42 instructs the pipeline orchestrator 61 to scale out the pipeline and to start parallel processing using the pipeline. Then, when passing of the target data of the current transaction has been completed, it instructs the pipeline orchestrator 61 to scale in the pipeline and to end parallel processing using the pipeline.

Next, an operation performed by the system 10 when data held by an information system is collected by the POST agent 23 and transmitted to a pipeline will be described.

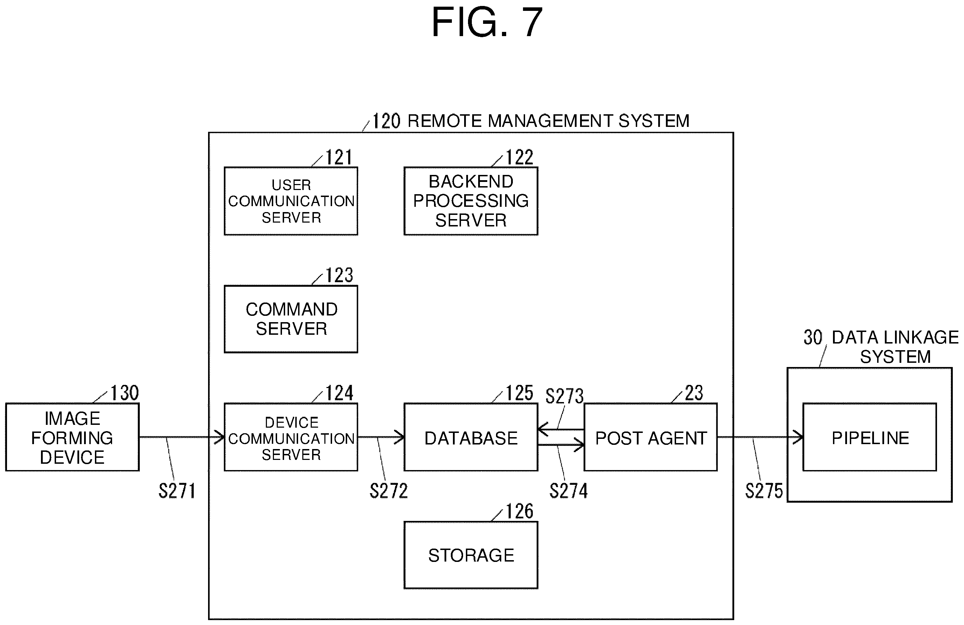

FIG. 7 is a diagram showing an example of the flow of an operation performed by the system 10 when data held by an information system is collected by the POST agent 23 and transmitted to a pipeline.

Like the example shown in FIG. 6, in the example shown in FIG. 7, the information system is a remote management system 120 of an image forming device. The database 125 stores event information indicating an event that has occurred in the image forming device managed by the remote management system 120. The example shown in FIG. 7 is an example of an operation performed by the system 10 when the image forming device 130 managed by the remote management system 120 transmits event information to the remote management system 120 indicating the event that occurred in the image forming device 130 itself.

When an event such as an error occurs in the image forming device 130 itself, the image forming device 130 transmits event information to the device communication server 124 of the remote management system 120 indicating the event that occurred in the image forming device 130 itself (S271). Examples of errors that occur in the image forming device 130 include a paper jam indicating that paper has become jammed inside the image forming device 130, and a cover open indicating that the cover of the image forming device 130 is open.

When the device communication server 124 of the remote management system 120 receives the event information transmitted by the image forming device 130 in S271, it updates the database 125 with the received event information (S272).

The POST agent 23 confirms at a specific timing whether or not the event information stored in the database 125 has been changed (S273). For example, the confirmation in S273 may be executed at the time of a periodic backup of the database 125. It may also be executed when the database 125 itself detects a change to the database 125. Further, it may also be executed when an API for changing the database 125 is called in the remote management system 120.

As a result of the confirmation in S273, when the POST agent 23 detects a change in the event information in the database 125, it acquires data from the database 125 which indicates the content of the change in the event information (S274).

After the processing of S274, the POST agent 23 transmits the data acquired in S274 to the pipeline of the data linkage system 30 to which the POST agent 23 itself is associated (S275).

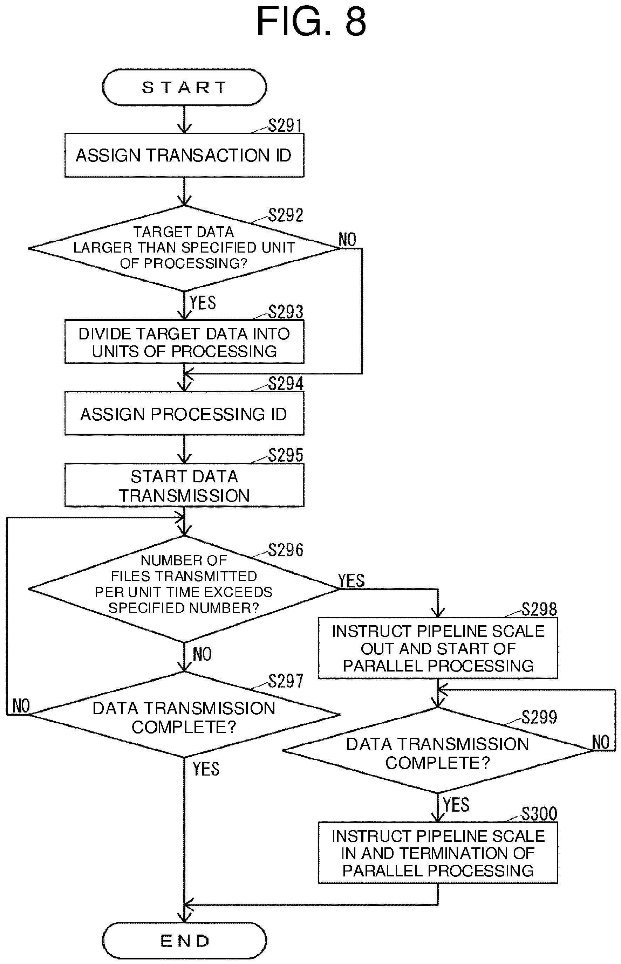

FIG. 8 is a flowchart of an operation performed by the POST agent 23 when files are transmitted to a pipeline.

As shown in FIG. 8, the POST agent 23 assigns a transaction ID to the current transaction, which transmits files to a pipeline (S291). Here, the transaction ID is, for example, a numerical value which is incremented each time a new transaction is generated in the POST agent 23.

The POST agent 23 determines whether or not the target data of the current transaction is larger than the specific processing unit (S292). Here, the specific processing unit is, for example, a specific number of tables.

If the POST agent 23 determines in S292 that the target data of the current transaction is larger than the specific processing unit, it divides the target data of the current transaction into specific processing units (S293).

If the POST agent 23 determines in S292 that the target data of the current transaction less than or equal to a specific processing unit, or completes the processing of S293, it assigns a processing ID as identification information to each processing unit of data (S294). Here, the processing ID is, for example, a numerical value which is incremented each time a new processing unit of data is generated for the same transaction in the POST agent 23.

After the processing of S294, the POST agent 23 starts the transmission of each processing unit of the target data of the current transaction to a pipeline (S295).

Then, the POST agent 23 determines whether or not the data amount transmitted to the pipeline per specific unit of time exceeds a specific amount (S296).

If the POST agent 23 determines in S296 that the data amount transmitted to the pipeline per specific unit of time has not exceeded the specific amount, it determines whether or not transmission of the target data of the current transaction to the pipeline has been completed (S297).

If the POST agent 23 determines in S297 that transmission of the target data of the current transaction to the pipeline has not been completed, it executes the processing of S296.

If the POST agent 23 determines in S297 that transmission of the target data of the current transaction to the pipeline has been completed, it ends the operation shown in FIG. 8.

If the POST agent 23 determines in S296 that the data amount transmitted to the pipeline per specific unit of time has exceeded the specific amount, it instructs the pipeline orchestrator 61 to scale out the pipeline and to start parallel processing using the pipeline (S298). Therefore, the pipeline orchestrator 61 scales out the pipeline to a specific state according to the instruction issued in S298, and instructs the pipeline to start parallel processing.

Then, the POST agent 23 determines whether or not transmission of the target data of the current transaction to the pipeline has been completed until it determines that transmission of the target data of the current transaction to the pipeline has been completed (S299).

If the POST agent 23 determines in S299 that transmission of the target data of the current transaction to the pipeline has been completed, it instructs the pipeline orchestrator 61 to scale in the pipeline and to end parallel processing using the pipeline (S300). Therefore, the pipeline orchestrator 61 scales in the pipeline to the original state according to the instruction issued in S300, and instructs the pipeline to end parallel processing.

After the processing of S300, the POST agent 23 ends the operation shown in FIG. 8.

Next, an operation performed by the system 10 when data held by an information system is collected by the GET agent 43 and passed to a pipeline will be described.

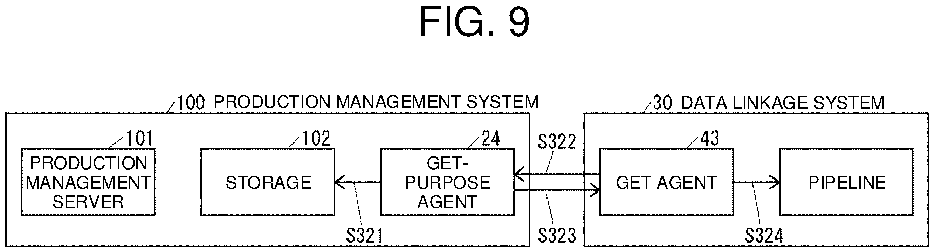

FIG. 9 is a diagram showing an example of the flow of an operation performed by the system 10 when data held by an information system is collected by the GET agent 43 and passed to a pipeline.

Like the example shown in FIG. 4, the information system the example shown in FIG. 9 is a production management system 100.

As shown in FIG. 9, the GET-purpose agent 24 of the production management system 100 generates, at a specific timing, structured data for linking based on the data stored in the storage 102 (S321).

The GET agent 43 of the data linkage system 30 periodically queries the GET-purpose agent 24 of the production management system 100, which is the information system associated with the GET agent 43 itself, for the existence of the structured data for linking (S322).

If the GET agent 43 confirms that the structured data for linking exists in the GET-purpose agent 24, it acquires the structured data from the GET-purpose agent 24 (S323).

After the processing of S323, the GET agent 43 passes the structured data acquired in S323 to the pipeline to which the GET agent 43 itself is associated (S324).

When files are passed to the pipeline, the GET agent 43 executes the same operation as the operation shown in FIG. 8. That is to say, the GET agent 43 assigns a transaction ID to the current transaction. Furthermore, if the target data of the current transaction is larger than the specific processing unit, the GET agent 43 divides the target data of the current transaction into specific processing units. Moreover, the GET agent 43 assigns a processing ID to the data of each processing unit. In addition, if the data amount passed to the pipeline per specific unit of time exceeds a specific amount, the GET agent 43 instructs the pipeline orchestrator 61 to scale out the pipeline and to start parallel processing using the pipeline. Then, when passing of the target data of the current transaction has been completed, it instructs the pipeline orchestrator 61 to scale in the pipeline and to end parallel processing using the pipeline.

Next, an operation of the data linkage system 30 when the data storage system 40 stores data will be described.

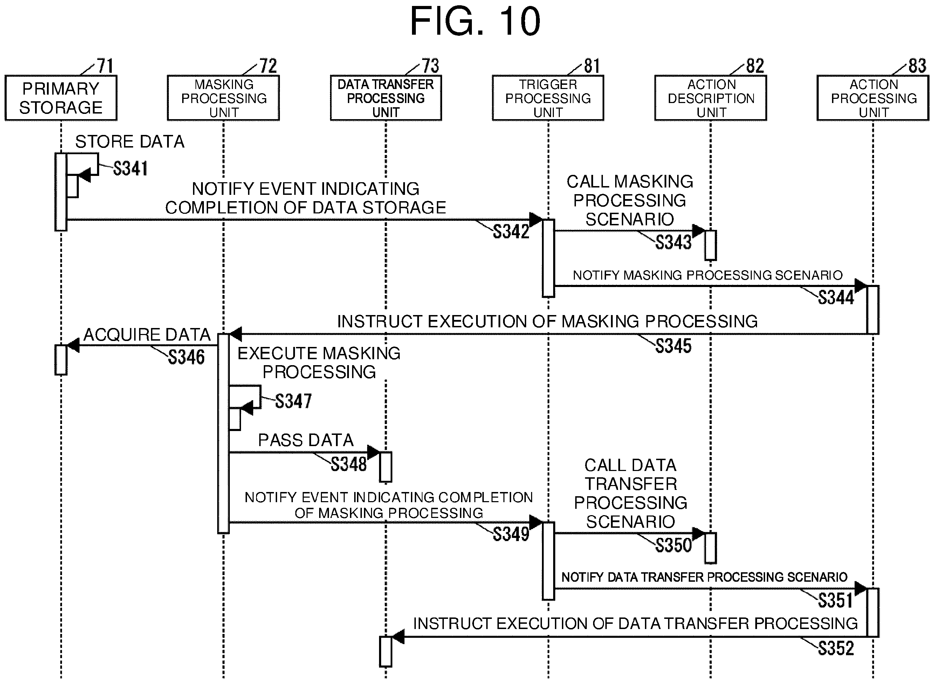

FIG. 10 is a sequence diagram of part of an operation performed by the data linkage system 30 when the data storage system 40 stores data.

As shown in FIG. 10, when the primary storage 71 of the pipeline 70 receives a specific processing unit of data from the data collection system, that is to say, the POST connector, the POST agent, the GET connector, or the GET agent, it stores the received data (S341). Then, the primary storage 71 notifies the pipeline orchestrator 61 with an event indicating that data storage is complete (S342).

When the trigger processing unit 81 of the pipeline orchestrator 61 receives the event notified by the primary storage 71 in S342, it analyzes the content of the event and calls from the action description unit 82 a scenario corresponding to the event, that is to say, a masking processing scenario (S343), and notifies the action processing unit 83 with the scenario called in S343 (S344). Therefore, the action processing unit 83 instructs the masking processing unit 72 of the pipeline 70 to execute processing based on the scenario notified in S344, that is to say, to execute masking processing with respect to the data stored in the primary storage 71 in S341 (S345).

When the masking processing unit 72 receives the instruction in S345, it executes masking processing with respect to the data stored in the primary storage 71 in S341. That is to say, the masking processing unit 72 firstly acquires the data stored in the primary storage 71 in S341 from the primary storage 71 (S346). Then, the masking processing unit 72 executes masking processing with respect to the data acquired in S346 (S347). Next, the masking processing unit 72 passes the data obtained after executing masking processing in S347 to the data transfer processing unit 73 (S348). Then, the masking processing unit 72 notifies the pipeline orchestrator 61 with an event indicating that masking processing has been completed (S349).

When the trigger processing unit 81 of the pipeline orchestrator 61 receives the event notified by the masking processing unit 72 in S349, it analyzes the content of the event and calls from the action description unit 82 a scenario corresponding to the event, that is to say, a data transfer scenario (S350), and notifies the action processing unit 83 with the scenario called in S350 (S351). Therefore, the action processing unit 83 instructs the data transfer processing unit 73 of the pipeline 70 to execute processing based on the scenario notified in S351, that is to say, to execute data transfer processing with respect to the data obtained after executing masking processing in S347 (S352).

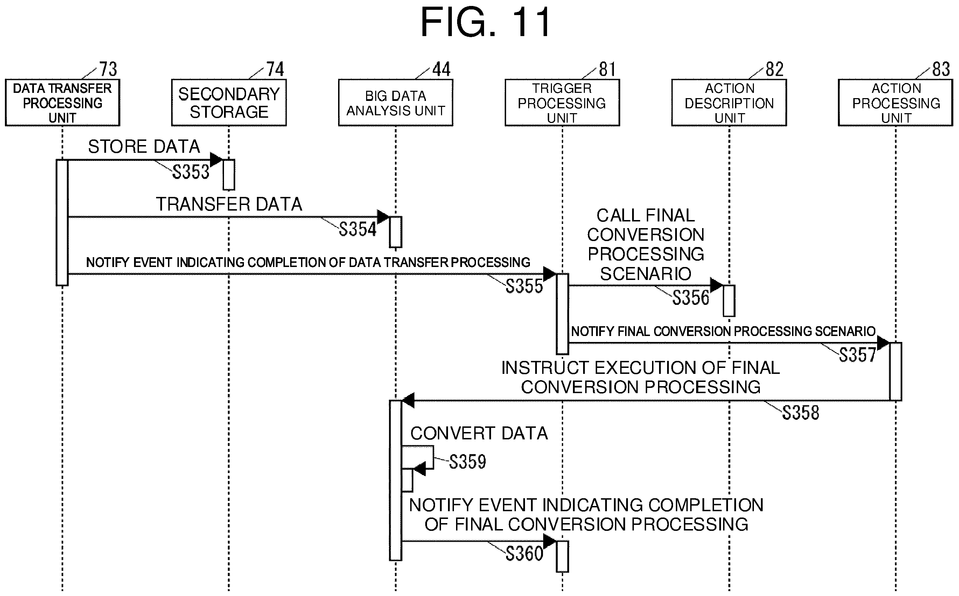

FIG. 11 is a sequence diagram of an operation that follows the operation shown in FIG. 10.

As shown in FIG. 11, when the data transfer processing unit 73 receives the instruction in S352, it executes data transfer processing with respect to the data obtained after execution of masking processing by the masking processing unit 72. That is to say, the data transfer processing unit 73 firstly stores in the secondary storage 74 the data passed from the masking processing unit 72 in S348 as data to be transferred to the big data analysis unit 44 (S353). Next, the data transfer processing unit 73 transfers the data stored in the secondary storage 74 in S353 to the big data analysis unit 44 via the secondary storage 74 (S354). Then, the data transfer processing unit 73 notifies the pipeline orchestrator 61 with an event indicating that data transfer processing is complete (S355).

When the trigger processing unit 81 of the pipeline orchestrator 61 receives the event notified by the data transfer processing unit 73 in S355, it analyzes the content of the event and calls from the action description unit 82 a scenario corresponding to the event, that is to say, a final conversion processing scenario (S356), and notifies the action processing unit 83 with the scenario called in S356 (S357). Therefore, the action processing unit 83 instructs the big data analysis unit 44 to execute processing based on the scenario notified in S357, that is to say, to execute final conversion processing with respect to the data stored in the secondary storage 74 in S354 (S358).

When the big data analysis unit 44 receives the instruction in S358, it executes final conversion processing with respect to the data transferred by the data transfer processing unit 73. That is to say, the big data analysis unit 44 firstly converts the data transferred from the data transfer processing unit 73 in S354 into a form that can be searched or aggregated by a specific query language (S359). Then, the big data analysis unit 44 notifies the pipeline orchestrator 61 with an event indicating that final conversion processing is complete (S360).

Next, an operation performed by the masking processing unit 72 in the masking processing of S347 will be described.

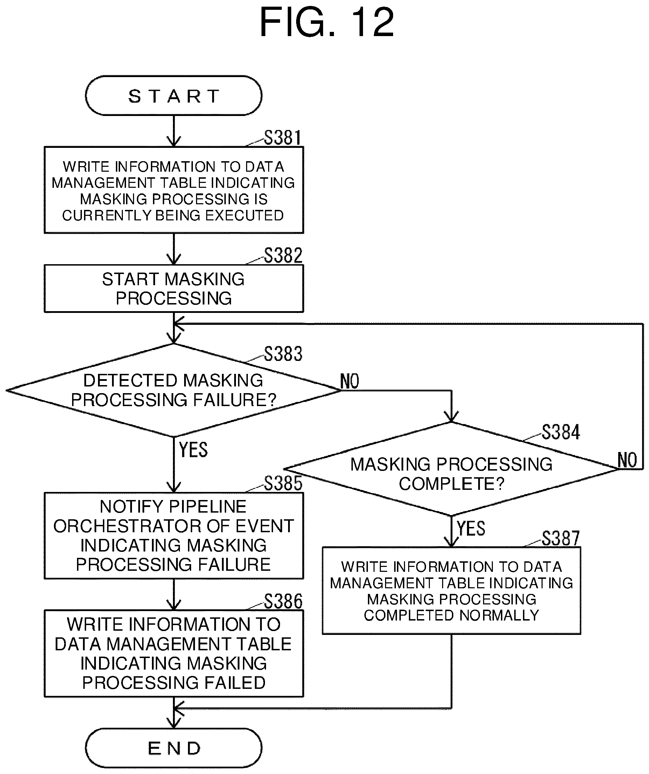

FIG. 12 is a flowchart of the operation performed by the masking processing unit 72 in the masking processing.

The masking processing unit 72 executes the operation shown in FIG. 12 for each processing unit of data.

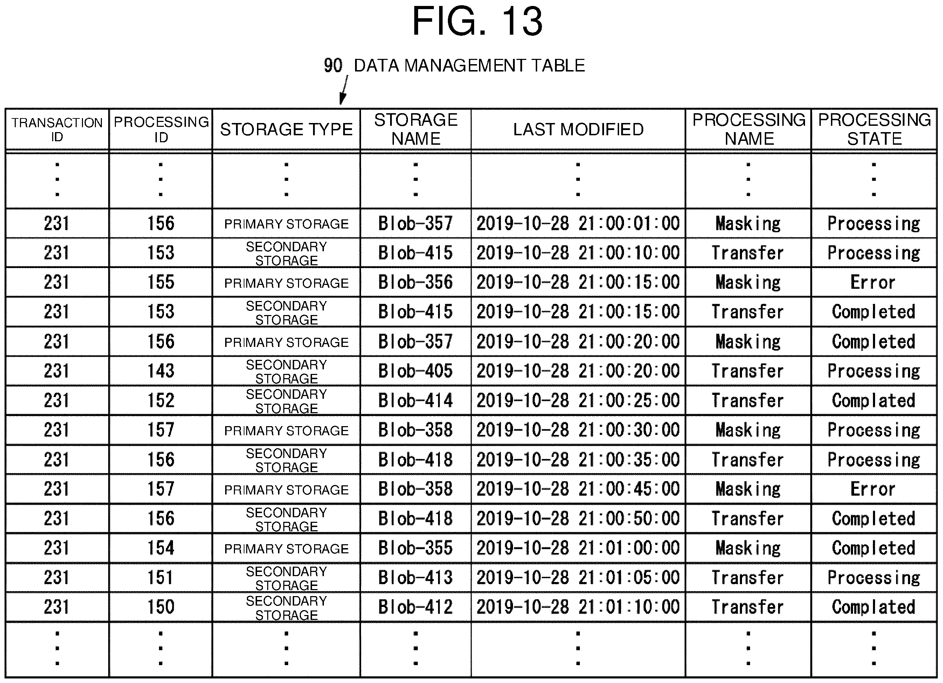

As shown in FIG. 12, the masking processing unit 72 writes information indicating that masking processing with respect to the target data of the current masking processing is currently being executed to a data management table 90 (see FIG. 13), which serves as data management information that manages the processing history of the target data for linking (S381).

FIG. 13 is a diagram showing an example of a data management table 90 used in the operation shown in FIG. 12.

The data management table 90 shown in FIG. 13 includes a transaction ID, a processing ID, a storage type which indicates the storage in which the data identified by the combination of the transaction ID and the processing ID is stored, a storage name which indicates a file name when the data identified by the combination of the transaction ID and the processing ID is stored in a storage, a last modified date and time which indicates the date and time the information was stored in the data management table 90, a processing name indicating the name of the processing being performed with respect to the data identified by the combination of the transaction ID and the processing ID, and a processing state indicating the state of the processing indicated by the processing name.

The storage type includes primary storage and secondary storage.

The processing name includes "Masking", which indicates masking processing, and "Transfer", which indicates data transfer processing. "Masking" is written in S381.

The processing state includes "Processing", which indicates that the processing indicated by the processing name is currently being executed, "Completed", which indicates that the processing indicated by the processing name has completed normally, and "Error", which indicates that the processing indicated by the processing name has failed. "Processing" is written in S381.

As shown in FIG. 12, after the processing of S381, the masking processing unit 72 starts to perform masking processing with respect to the target data (S382).

Next, the masking processing unit 72 determines whether or not it has detected a failure in the masking processing started in S382, that is to say, failure in the data conversion (S383).

If the masking processing unit 72 determines in S383 that it has not detected a failure in the masking processing, it determines whether or not the masking processing started in S382 has been completed (S384).

If the masking processing unit 72 determines in S384 that the masking processing has not been completed, it executes the processing of S383.

If the masking processing unit 72 determines in S383 that it has detected a failure in the masking processing, it notifies the pipeline orchestrator 61 with an event indicating that masking processing has failed (S385). The event includes the transaction ID and the processing ID of the target data.

Next, the masking processing unit 72 writes information to the data management table 90 indicating that the masking processing with respect to the target data of the current masking processing has failed (S386), and ends the operation shown in FIG. 12. The "processing name" and "processing state" of the information written in S386 are "Masking" and "Error", respectively.

If the masking processing unit 72 determines in S384 that the masking processing has been completed, it writes information to the data management table 90 indicating that the masking processing with respect to the target data of the current masking processing has been completed normally (S387), and ends the operation shown in FIG. 12. The "processing name" and "processing state" of the information written in S387 are "Masking" and "Completed", respectively.

Although the operation of the masking processing unit 72 in the masking processing of S347 has been described above, the operation of the data transfer processing unit 73 in the data transfer processing of S354, and the operation of the big data analysis unit 44 in the final conversion processing of S359 are also the same.

Next, an operation performed by the data linkage system 30 when the masking processing unit 72 has failed to perform data processing will be described.

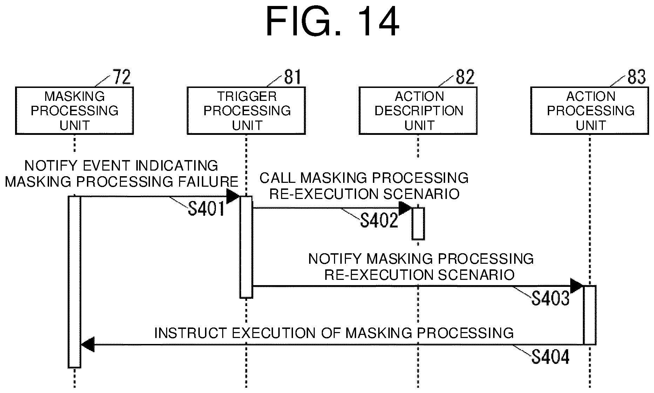

FIG. 14 is a sequence diagram of an operation performed by the data linkage system 30 when the masking processing unit 72 has failed to perform data processing.

When the masking processing fails during execution of the operation shown in FIG. 10, as shown in FIG. 14, the masking processing unit 72 notifies the pipeline orchestrator 61 with an event indicating that the masking processing has failed (S401). The notification of S401 corresponds to the notification of S385 (FIG. 12).

When the trigger processing unit 81 of the pipeline orchestrator 61 receives the event notified by the masking processing unit 72 in S401, it analyzes the content of the event and calls from the action description unit 82 a scenario corresponding to the event, that is to say, a masking processing re-execution scenario (S402), and notifies the action processing unit 83 with the scenario called in S402 (S403). Therefore, the action processing unit 83 instructs the masking processing unit 72 of the pipeline 70 to execute processing based on the scenario notified in S403, that is to say, to execute masking processing with respect to the data stored in the primary storage 71 in S341 (S404). Here, the action processing unit 83 specifies, with respect to the data specified by the combination of the transaction ID and the processing ID included in the event notified by the masking processing unit 72 in S401, the information having the most recent last modified date and time among the information included in the data management table 90. Then, if the processing state of the specified information is not "Completed", that is to say, is "Processing" or "Error", it instructs the masking processing unit 72 of the pipeline 70 to execute masking processing with respect to the data.

After the processing of S404, the processing from S346 onwards shown in FIG. 10 is executed.

The operation of the data linkage system 30 in a case where the masking processing unit 72 has failed to perform data processing has been described above. However, the data linkage system 30 is capable of re-executing the processing by the same mechanism when a component of the data storage system 40 other than the masking processing unit 72, such as the data transfer processing unit 73 or the big data analysis unit 44, has failed to perform data processing, or when a component of the data linkage system 30 other than the data storage system 40, such as the data collection system, has failed to perform data processing.

The data stored in the primary storage 71 is not frequently used. Therefore, the primary storage 71 may move data which has been stored in the primary storage 71 itself for a specific period of time to a specific storage area outside the pipeline. When moving the data to the specific storage area outside the pipeline, the primary storage 71 may move the data after compressing the data. After moving the data to the specific storage area outside the pipeline, the primary storage 71 notifies the pipeline orchestrator 61 with the combination of the transaction ID and the process ID of the data that has been moved to the specific storage area outside the pipeline. When the pipeline orchestrator 61 instructs the masking processing unit 72 of the pipeline 70 to execute masking processing with respect to the data moved to the specific storage area outside the pipeline, it instructs the primary storage 71 to restore the data to the primary storage 71. Therefore, the primary storage 71 acquires the data specified by the pipeline orchestrator 61 from the specific storage area outside the pipeline, and stores the data in the primary storage 71 itself. Here, if the data specified by the pipeline orchestrator 61 has been compressed, the primary storage 71 decompresses the data before storing the data in the primary storage 71 itself.

The data stored in the primary storage 71 has been described above, but the same applies to the data stored in the secondary storage 74. That is to say, the secondary storage 74 may move data which has been stored in the secondary storage 74 itself for a specific period of time to a specific storage area outside the pipeline, and restore the data which has been moved to the specific storage area outside the pipeline to the secondary storage 74 itself according to an instruction from the pipeline orchestrator 61. Furthermore, when moving the data to the specific storage area outside the pipeline, the secondary storage 74 may move the data after compressing the data.

Next, an operation performed by the data linkage system 30 when the application unit 50 requests an update of the data of a specific information system stored in the data storage system 40 will be described.

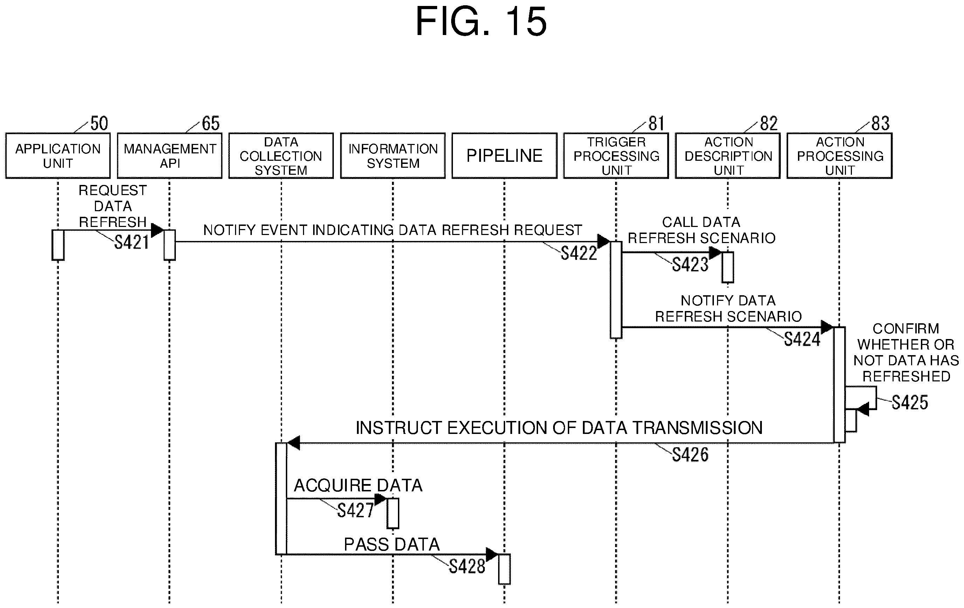

FIG. 15 is a sequence diagram of an operation performed by the data linkage system 30 when the application unit 50 requests an update of the data of a specific information system (hereinafter, referred to as "target information system" in the description of the operation shown in FIG. 15) stored in the data storage system 40.

Examples of a case where the application unit 50 requests an update of the data of a target information system stored in the data storage system 40 includes a case where an application service requests an update of the data of a target information system stored by the data storage system 40 according to an instruction from a user of the application service of the application unit 50.

As shown in FIG. 15, the application unit 50 requests the management API 65 to update the data of the target information system stored in the data storage system 40 (S421).

When the management API 65 receives the request in S421, it notifies the pipeline orchestrator 61 with an event indicating the received request (S422).

When the trigger processing unit 81 of the pipeline orchestrator 61 receives the event notified by the management API 65 in S422, it analyzes the content of the event and calls from the action description unit 82 a scenario corresponding to the event, that is to say, an update scenario of the data of the target information system stored in the data storage system 40 (S423), and notifies the action processing unit 83 with the scenario called in S423 (S424). Therefore, the action processing unit 83 executes the processing based on the scenario notified in S424. That is to say, the action processing unit 83 firstly confirms whether or not the data of the target information system stored in the data storage system 40 is new (S425). As a result of the confirmation in S425, if the data of the target information system stored in the data storage system 40 is not the newest data, the action processing unit 83 instructs the data collection system for the target information system to execute transmission of the data of the target information system (S426).

Therefore, the data collection system acquires the data from the target information system (S427), and passes the data acquired in S427 to the pipeline associated with the data collection system itself (S428).

After the processing of S428, the processing shown in FIG. 10 and FIG. 11 is executed.

If the pipeline 70 and the big data analysis unit 44 perform data processing as a result of the application unit 50 requesting an update of the data of the target information system stored in the data storage system 40, it is preferable for the final conversion processing by the big data analysis unit 44 to be completed early. Therefore, in terms of the processing of S354, the data transfer processing unit 73 may directly transfer the data passed from the masking processing unit 72 in S348 to the big data analysis unit 44 rather than transferring the data stored in the secondary storage 74 in S353 to the big data analysis unit 44 via the secondary storage 74.

An update of the data of a target information system stored in the data storage system 40 has been described above. Here, the data linkage system 30 may update only specific data among the data of the target information system stored in the data storage system 40. For example, the data linkage system 30 may update only specific table data among the data of the target information system stored in the data storage system 40, such as the device management table.

Next, an operation performed by the data linkage system 30 when its own configuration is changed in response a change in the configuration of a specific information system will be described.

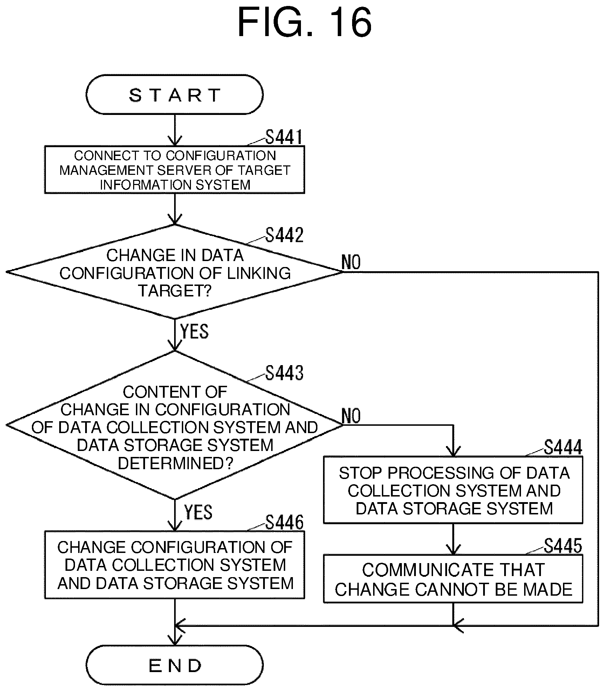

FIG. 16 is a flowchart of an operation performed by the data linkage system 30 when its own configuration is changed in response a change in the configuration of a specific information system (hereinafter, referred to as "target information system" in the description of the operation shown in FIG. 16).

The configuration management gateway 63 executes the operation shown in FIG. 16 at a specific timing.

As shown in FIG. 16, the configuration management gateway 63 connects to the configuration management server of the target information system (S441), and determines whether or not there is a change in the configuration of the target data for linking based on information from the configuration management server of the target information system (S442).

If the configuration management gateway 63 determines in S442 that there is no change in the configuration of the target data for linking, it ends the operation shown in FIG. 16.

If it is determined in S442 that there is a change in the configuration of the target data for linking, the configuration management server 62 determines whether or not the content of the change in the configurations of the data collection system and the data storage system 40 which are to be changed has been determined according to the content of the change in the configuration of the target data for linking (S443). Here, the configuration management server 62 stores change content correspondence information which indicates the correspondence between the content of the change in the configuration of the target data for linking, and the content of the change in the configurations of the data collection system and the data storage system 40 which are to be changed according to the content of the change in the configuration of the target data for linking. If a correspondence relating to the content of the change in the configuration of the target data for linking is stored in the change content correspondence information, the configuration management server 62 determines that the content of the change in the configurations of the data collection system and the data storage system 40 which are to be changed according to the content of the change in the configuration of the target data for linking has been determined. On the other hand, if a correspondence relating to the content of the change in the configuration of the target data for linking is not stored in the change content correspondence information, the configuration management server 62 determines that the content of the change in the configurations of the data collection system and the data storage system 40 which are to be changed according to the content of the change in the configuration of the target data for linking has not been determined.

If the configuration management server 62 determines in S443 that the content of the change in the configurations of the data collection system and the data storage system 40 which are to be changed according to the content of the change in the configuration of the target data for linking has not been determined, it stops the processing of the data collection system and the data storage system 40 relating to the target data for linking (S444). Next, the configuration management server 62 communicates, to a predetermined destination, such as the destination of a contact for the target information system, that the configuration of the data linkage system 30 cannot be changed according to the change in the configuration of the target information system (S445), and ends the processing shown in FIG. 16.

If the configuration management server 62 determines in S443 that the content of the change in the configurations of the data collection system and the data storage system 40 which are to be changed according to the content of the change in the configuration of the target data for linking has been determined, it changes the configurations of the data collection system and the data storage system 40 which are to be changed according to the content of the change in the configuration of the target data for linking with the content of the change determined in the change content correspondence information (S446). Here, the content of the change in the configuration of the data collection system may be, for example, a change in the range of target data for linking, or a change in the frequency of linking. When the configuration management server 62 changes the configuration of the data collection system, it may deploy a new data collection system having the changed configuration. The content of the change in the configuration of the data storage system 40 may be, for example, a change in the processing content of the masking processing by the masking processing unit, or a change in the processing content of the final conversion processing in the big data analysis unit 44.

After the processing of S446, the configuration management server 62 ends the operation shown in FIG. 16.

As described above, when the data linkage system 30 detects a change in the data configuration of an information system of a data collection destination (YES in S442), and content of a change in the configuration of the data linkage system 30 itself which configuration should be changed according to the content of the change in data configuration in the information system, has been determined, (YES in S443), the configuration change system changes the configuration among configurations of the data linkage system 30 itself, which configuration should be changed according to the content of the change in data configuration in the information system, based on the content having been determined (S446). Therefore, data can be linked even when there is a change in the data configuration in the information system of the data collection destination.

The data linkage system 30 changes the configuration of the data collection system according to a change in the data configuration in the information system. Therefore, the data can be appropriately collected even when there is a change in the data configuration in the information system of the data collection destination.

The data linkage system 30 changes the configuration of the data conversion system according to a change in the data configuration in the information system. Therefore, the data can be appropriately converted even when there is a change in the data configuration in the information system of the data collection destination.

The data linkage system 30 detects the change in the data configuration in the information system based on information from a configuration management server of the information system. Therefore, the change in the data configuration in the information system can be appropriately detected.

In the present embodiment, the pipeline includes a masking processing unit serving as the data conversion system. However, the pipeline may include at least one data conversion system other than the masking processing unit in place of the masking processing unit, or in addition to the masking processing unit.

### Brief Description of the Reference Symbols

- 21: Information system
- 21a: Configuration management server
- 22: POST connector (data collection system)
- 23: POST agent (data collection system)
- 24: GET-purpose agent (data collection system)
- 30: Data linkage system
- 40: Data storage system
- 42: GET connector (data collection system)
- 43: GET agent (data collection system)
- 44: Big data analysis unit (data conversion system)
- 62: Configuration management server (configuration change system)
- 72: Masking processing unit (data conversion system)
- 100: Production management system (information system)
- 120: Remote management system (information system)

## Claims

1. A data linkage system (30) comprising:
a data collection system that collects data held by an information system (21);
a data storage system (40) that stores data held by a plurality of information systems (21) and collected by the data collection system; and
a configuration change system that changes a configuration of the data linkage system, wherein
when a change in data configuration in the information system is detected and content of a change of a configuration among configurations of the data linkage system, which configuration should be changed according to the content of the change in data configuration in the information system, has been determined, the configuration change system changes the configuration among configurations of the data linkage system, which configuration should be changed according to the content of the change in data configuration in the information system, based on the content having been determined.

2. The data linkage system according to claim 1, wherein
the configuration change system changes a configuration of the data collection system according to the change in data configuration in the information system.

3. The data linkage system according to claim 1 or 2, wherein
the data storage system includes a data conversion system that converts the data collected by the data collection system, and
the configuration change system changes a configuration of the data conversion system according to the change in data configuration in the information system.

4. The data linkage system according to any one of claims 1 to 3, wherein the change in data configuration in the information system is detected based on information from a configuration management server of the information system.

5. A configuration change system that changes a configuration of a data linkage system (30) including:
a data collection system that collects data held by an information system (21); and
a data storage system (40) that stores data held by a plurality of information systems (21) and collected by the data collection system, wherein
when a change in data configuration in the information system is detected and content of a change of a configuration among configurations of the data linkage system, which configuration should be changed according to the content of the change in data configuration in the information system, has been determined, the configuration change system changes the configuration among configurations of the data linkage system, which configuration should be changed according to the content of the change in data configuration in the information system, based on the content having been determined.
